(19) Europäisches Patentamt
European Patent Office
Office européen des brevets

(11) Veröffentlichungsnummer: **0 664 081 A2**

# (12) EUROPÄISCHE PATENTANMELDUNG

(21) Anmeldenummer: **95100429.0**

(22) Anmeldetag: **13.01.95**

(51) Int. Cl.[6]: **A01N 33/12**, //(A01N33/12, 57:02,55:00,53:00,51:00,47:02, 31:14)

(30) Priorität: **20.01.94 DE 4401542**

(43) Veröffentlichungstag der Anmeldung: **26.07.95 Patentblatt 95/30**

(84) Benannte Vertragsstaaten: **AT BE CH DE DK ES FR GB GR IT LI NL SE**

(71) Anmelder: **Hoechst Schering AgrEvo GmbH**
**Miraustrasse 54**
**D-13509 Berlin (DE)**

(72) Erfinder: **Sagenmüller, Alfons, Dr.**
**Komotauerweg 8**
**D-65451 Kelsterbach (DE)**

Erfinder: **Schubert, Hans-Herbert, Dr., Plum Village**
**D 7-22-3 Fukasawa,**
**Setagaya-ku**
**Tokyo 158 (JP)**

Erfinder: **Uzawa, Shigeru, Gardencourt 7-201**
**1778-103 Yasashido-cho,**
**Midori-ku**
**Chiba-shi,**
**Chibaa 299-31 (JP)**

Erfinder: **Saito, Kenichi**
**5-16 Senzawa**
**Mobara-shi,**
**Ciba 299-41 (JP)**

## (54) Synergistische Kombinationen von Ammoniumsalzen.

(57) Die Erfindung betrifft insektizide Mittel, die gekennzeichnet sind durch einen Gehalt an
A) anorganischen oder organischen Ammoniumsalzen der Formel I,

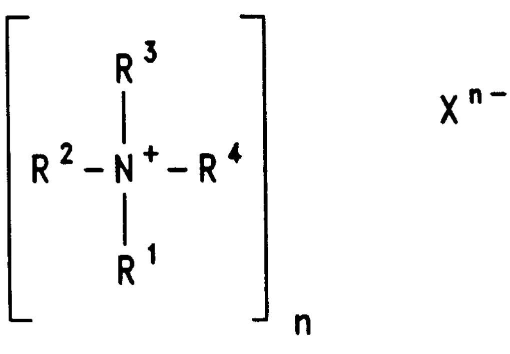

(I)

in Kombination mit mindestens einer Verbindung aus der Gruppe, welche die Verbindungen Silafluofen (4-Ethoxyphenyl-[3-(4-fluor-3-phenoxy-phenyl)-propyl]-dimethyl-silan), MTI-732, Imidacloprid, Ethofenprox (Trebon, MTI-500, (2-(4-Ethoxyphenyl)-2-methylpropyl-3-phenoxybenzylether), PP 682 (ICI-A5682), TI304, natürliche oder synthetische Pyrethroide und Phosphorsäureester umfaßt.

EP 0 664 081 A2

Die in neuerer Zeit aufgefundenen Insektizide unterschiedlicher Strukturklassen verfügen über eine gute insektizide Wirkung und wirken gegen materialzerstörende Insekten. Trotzdem besteht ein Bedarf an Mitteln, die die gleiche Wirkung bereits bei geringeren Aufwandmengen erzielen.

Es wurden nun neue Kombinationen von Ammoniumsalzen und Insektiziden gefunden, die überraschend starke synergistische Wirkungen bei der Bekämpfung von materialzerstörenden Insekten aufweisen.

Gegenstand der vorliegenden Erfindung sind somit insektizide Mittel, die gekennzeichnet sind durch einen Gehalt an

A) anorganischen oder organischen Ammoniumsalzen der Formel I,

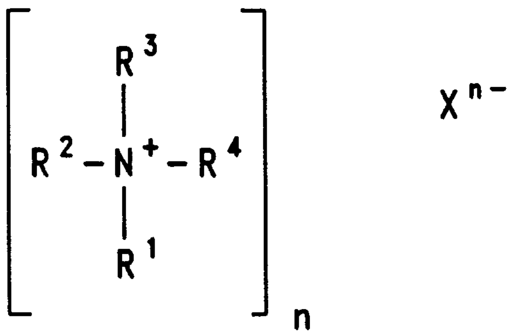

(I)

worin $R^1$ -$R^4$ gleich oder verschieden sind und unabhängig voneinander Wasserstoff oder einen über eine C-N-Bindung gebundenen organischen Substituenten mit bis zu 18 C-Atomen bedeuten, wobei mindestens einer der Reste $R^1$ - $R^4$ von Wasserstoff verschieden ist, $X^{n-}$ das Anion einer anorganischen oder organischen n-basigen Säure und n 1, 2 oder 3 ist,

in Kombination mit mindestens einer Verbindung aus der Gruppe, welche die Verbindungen

B) Silafluofen (4-Ethoxyphenyl-[3-(4-fluor-3-phenoxy-phenyl)-propyl]-dimethylsilan, Formel II),

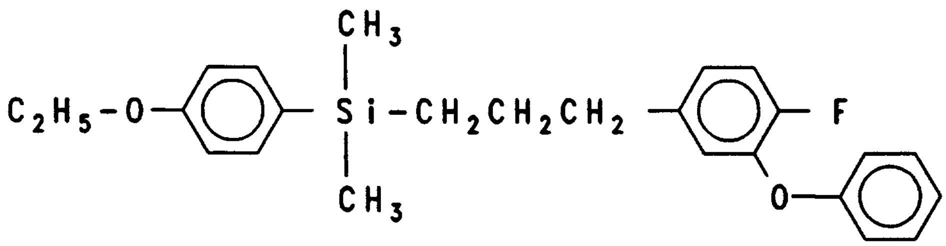

(II)

C) MTI-732 (Formel III),

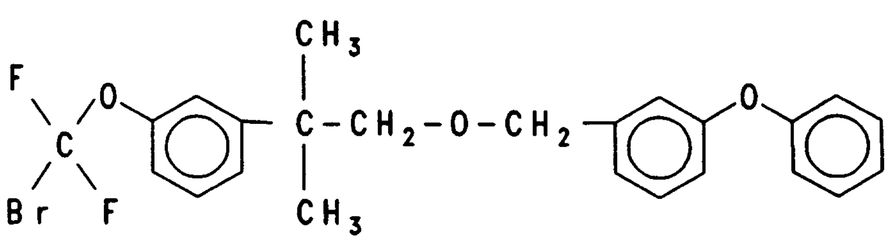

(III)

D) Imidacloprid (Formel IV),

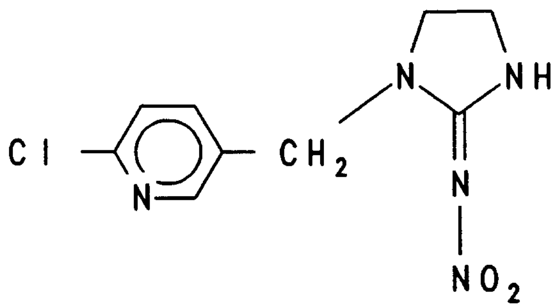 (IV)

E) Ethofenprox (Trebon, MTI-500, (2-(4-Ethoxyphenyl)-2-methylpropyl-3-phenoxybenzylether, Formel V),

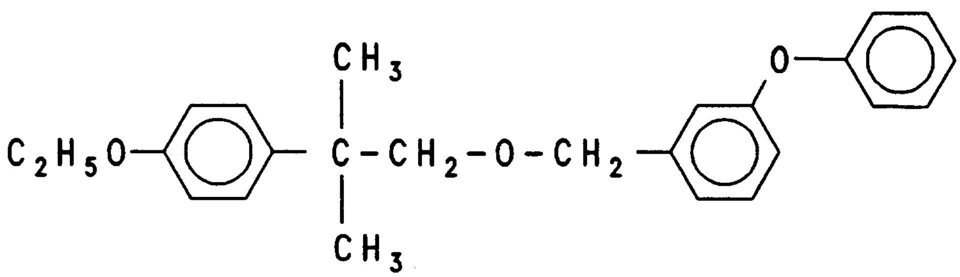 (V)

F) PP 682 (ICI-A5682, Formel VI),

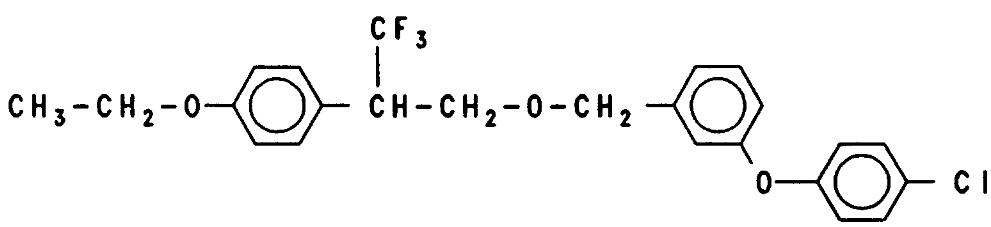 (VI)

G) TI304 (Formel VII),

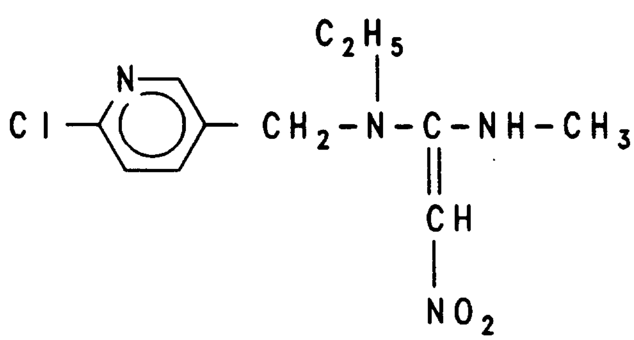 (VII)

H) natürliche oder synthetische Pyrethroide und

I) Phosphorsäureester umfaßt.

Bei den Verbindungen vom Typ A handelt es sich vorzugsweise um Ammoniumsalze, worin $R^1$ bis $R^4$ gleich oder verschieden sind und unabhängig voneinander Wasserstoff, $(C_1\text{-}C_{18})$-Alkyl; $(C_7\text{-}C_{13})$-Aralkyl, wie Benzyl; $(C_1\text{-}C_6)$-Alkoxy-$(C_1\text{-}C_{12})$-alkyl; $[-CH_2\text{-}CH_2\text{-}O]_x\text{-}H$ oder $[-CH(CH_3)\text{-}CH_2\text{-}O]_x\text{-}H$ und x = 1, 2 oder 3 ist, bedeuten.

Besonders bevorzugt sind Salze, worin $R^1$ und $R^2$ jeweils $(C_1\text{-}C_4)$-Alkyl, insbesondere Methyl, $R^3$ und $R^4$ jeweils $(C_8\text{-}C_{12})$-Alkyl, insbesondere Decyl oder Benzyl bedeuten.

Als Anionen $X^{n-}$ werden bevorzugt $Cl^-$, $Br^-$, $SO_4{}^{2-}$, $HSO_4{}^-$, $PO_4{}^{3-}$,, $HPO_4{}^{2-}$, $H_2PO_4{}^-$, $CH_3COO^-$, $COO_2{}^{2-}$, $SCN^-$, insbesondere $Cl^-$.

Bei den Verbindungen vom Typ A sind die folgenden Verbindungsgruppen von besonderem Interesse:

1) Primäre Ammoniumsalze, wie z.B.
- Stearylammoniumacetat (Genamin®-SH 500 A),
- Oleylammoniumacetat (Genamin®-OL 500 A),
- Talgfettaminacetat (Genamin®-TA 500 A),
- Cocosfertaminoleat (Genamin®-CC 500 E),
- Cocosfettaminacetat (Genamin®-CC 500 A) und
- Talgfettpropylendiaminoacetat (Genamin®-TAP 500 E).

2) Sekundäre Ammoniumsalze, wie z.B. Präpagen®-WKL-Marken (verschiedene Dialkylammoniumchloride).

3) Tertiäre Ammoniumsalze, wie z.B. Cetyldimethylammoniumchlorid oder Oleyldimethylammoniumchlorid.

4) Quartäre Ammoniumsalze, wie z.B.
- Hexadecyltrimethylammoniumchlorid (Dodigen 1383®),
- Hexadecyltrimethylammoniumchlorid (Dodigen 2544®),
- Sojaalkyltrimethylammoniumchlorid (Dodigen 5594®),
- Kokosalkyldimethylbenzylammoniumchlorid (Dodigen 226®),
- Kokosalkyldimethylbenzylammoniumchlorid (Dodigen 5462®),
- Kokosalkyl-2,4-dichlorbenzyldimethylammoniumchlorid (Dodigen 1509®),
- Stearyldimethylbenzylammoniumchlorid (Dodigen 1828®),
- Dikokosalkyldimethylammoniumchlorid (Dodigen 1490®),
- Distearyldimethylammoniumchlorid (Präpagen WK®),
- quart. Dialkylammoniumchlorid (Präpagen WKL®) und
- Ditalgfettalkyldimethylammoniumchlorid (Präpagen WKT®);
  Dodigen®-, Präpagen®- und Genamin®-K-Marken wie Genamin®-KDM-F (verschiedene Alkyltrimethylammoniumchloride) oder
- Distearyldimethylammoniumchlorid (Genamin®-DSAC) und
- Didecylmethylpolyoxyethylammoniumpropionat (Dodigen® 3519);

Präpagen® WK 1852, WKL, WKT (verschiedene Difettsäuredimethylammoniumchloride), sowie unterschiedliche Benzyltrimethylammoniumchloride des Typs Dodigen® 1611 und 2809.

Diese und weitere erfindungsgemäß in Betracht kommende primäre, sekundäre, tertiäre und quaternäre Ammoniumsalze sind in McCutcheon's - Emulsifiers & Detergents, (1991), Gen Rock, beschrieben.

Von speziellem Interesse ist der Einsatz der Verbindung A1 (Sanisol B-50®, [Alkyl-Benzyldimethylammoniumchlorid) der Formel (VIII)

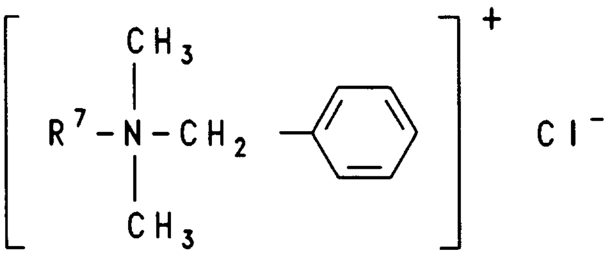

(VIII)

worin

$R^7$ $(C_8-C_{18})$-Alkyl bedeutet.

Bei den Verbindungen vom Typ H handelt es sich vorzugsweise um Pyrethroide wie (S)-α-Cyano-3-phenoxybenzyl(1R,3R)-3-(2,2-dibromovinyl)-2,2-dimethylcyclopropancarboxylat [Deltamethrin], Acrinathrin, Allethrin, Alphamethrin, Bioallethrin, (s)-Cyclopentenyl-Isomer), Bioresmethrin, Cycloprothrin, Cyfluthrin, Cyhalothrin, Cypermethrin, α-Cyano-3-phenyl-2-methylbenzyl 2,2-dimethyl-3-(2-chloro-2-trifluoromethylvinyl)-cyclopropanecarboxylat(FMC 54800), Fenpropathrin, Fenfluthrin, Flumethrin, Permethrin, Resmethrin, Fenvalerate oder Tralomethrin.

Acrinathrin, Tralomethrin, Permethrin und Cypermethrin sind bevorzugte Pyrethroide; insbesonders bevorzugt sind Fenvalerate, Tralomethrin und Deltamethrin.

Bei den Verbindungen vom Typ I handelt es sich vorzugsweise um Phosphorthioate wie z. B. Chlorpyriphos, Triazophos und Isazophos.

Die erfindungsgemäßen Mittel können einen oder mehrere Kombinationspartner neben den Ammoniumsalzen enthalten. Silafluofen und die Ammoniumsalze sind im Handel erhältlich.

Die Verbindung Ethofenprox (MTI-500, Trebon) wird im "Farm Chemicals Handbook", Willoughby (1991) beschrieben.

Die Verbindung MTI-732 wird in der DE 3 708 231 beschrieben.

Die Verbindung Imidacloprid wird in der EP 0 192 060 beschrieben.

Die Verbindung PP682 (ICI-A5682) ist aus der GB 2187452, GB 2178739 sowie der EP 0 211 561 bekannt.

Die Verbindung TI-304 ist aus der EP 0 302 389 und der EP 0 375 613 bekannt.

Die restlichen Kombinationspartner sind aus "The Pesticide Manual", 9th ed. British Crop. Protection Council (1991), bekannt.

Der Einsatz von Mischungen, die synergistische Effekte verursachen, ist mit großen wirtschaftlichen, aber auch ökologischen Vorteilen verbunden.

Unter Synergismus versteht man die sich gegenseitig verstärkende Wirkung von zwei oder auch mehr Stoffen. Im vorliegenden Fall bewirkt die kombinierte Anwendung von zwei oder mehr Verbindungen, daß die Aufwandmenge der Insektizide reduziert werden kann und trotzdem die gleiche insektizide Wirkung erreicht wird, bzw. daß mit den gleichen Aufwandmengen der Insektizide eine höhere als die zu erwartende additive Wirkung der einzeln eingesetzten Wirkstoffe erzielt wird. Die Reduktion der Aufwandmengen betrifft beide Kombinationspartner.

Die erfindungsgemäßen Mittel eignen sich bei guter Pflanzenverträglichkeit und günstiger Warmblütertoxizität besonders bevorzugt zur Bekämpfung von Insekten, die in der Landwirtschaft, in Forsten, im Vorrats- und Materialschutz sowie auf dem Hygienesektor vorkommen.

Die folgenden Anwendungsgebiete sind von besonderem Interesse: Präventive und kurative Behandlung von Holz, sowie Behandlung von Boden.

Die Mittel sind gegen normal sensible und resistente Arten sowie gegen alle oder einzelne Entwicklungsstadien wirksam.

Zu den oben erwähnten Schädlingen gehören:

Aus der Ordnung der Arachnida z.B. Scorpio maurus, Lactrodectus mactans.

Aus der Ordnung der Acarina z.B. Acarus siro, Agras spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Aus der Ordnung der Isopoda, z.B. Oniscus asellus, Armadillidium vulgare und Porcellio scaber.

Aus der Ordnung der Diplopoda z.B. Blaniulus guttulatus.

Aus der Ordnung der Chilopoda z.B. Geophilus carpophagus und Scutigera spp.

Aus der Ordnung der Symphyla z.B. Scutigerella immaculata.

Aus der Ordung der Thysanura z.B. Lepisma saccharina.

Aus der Ordnung der Collembola z.B. Onychiurus armatus.

Aus der Ordnung der Orthoptera z.B. Blatta orientalis und Periplaneta americana, Leucophaea maderae, Blatella germanica, Acheta domesticus, Gryllotalpa spp., Locusta migratoria migratorioides, Melanoplus differentialis, Oxya spp. und Schistocerca gregaria.

Aus der Ordnung der Dermaptera z.B. Forficula auricularia.

Aus der Ordnung der Anoplura z.B. Phylloxera vastatrix, Pemphigus spp., Pediculus humanus corporis, Haematopinus spp. und Linognathus spp.

Aus der Ordnung der Mallophaga z.B. Trichodectes spp. und Damalinea spp.

Aus der Ordnung der Thysanoptera z.B. Hercinothrips femoralis und Thrips tabaci.

Aus der Ordnung der Heteroptera z.ß. Eurygaster spp., Dysdercus intermedius, Piesma quadrata, Cimex lectularius, Rhodnius prolixus, Triatoma spp., Leptocorisa spp., Nezara viridula und Scotinophara quadrata.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelus bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp. und Sogatella furcifera.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana und Cnaphalocrocis medinalis, Chilo spp., Sesamia inferens, Tryporyza spp. und Parnara gutata.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylloides chrysocephala, Epilachna varivestis, Atomaria spp., Oryzaephilus surinamensis, Anthonumus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzaephilus und Oulema oryzae.

Aus der Ordnung der Hymenoptera z.B. Diprion spp., Hoplocampa spp., Lasius spp., Monomorium pharaonis und Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Stomorys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hydrellia spp. und Chlorops oryzae.

Aus der Ordnung der Siphonaptera z.B. Xenopsylla cheopis und Ceratophyllus spp. Aus der Ordnung der Arachnida z.B. Scorpio maurus und Latrodectus mactans.

Die meisten holzzerstörenden Insekten gehören zu den Coleoptera, Lepidoptera und Isoptera, zu denen die Termiten gehören.

Die erfindungsgemäßen Mittel werden vorzugsweise

- gegen holzzerstörende Termiten, wie z.B. Reticulitermes, Coptotermes und Cryptotermes,
- gegen Vertreter der Unterklasse der Cerambycidae, wie z.B. Hylotrupes bajulus (Hausbock),
- gegen Vertreter der Unterklasse der Anobiidae, wie z.B. Anobium punctatum (Gewöhnlicher Nagelkäfer),
- gegen Vertreter der Unterklasse der Ipidae, wie z.B. Xyloterus lineatus (Gestr. Nadelnutzholzborkenkäfer),
- gegen Vertreter der Unterklasse der Platypodidae, wie z.B. Platypus cylindrus (Kernholzkäfer),
- gegen Vertreter der Unterklasse der Siricidae, wie z.B. Paururus spp. (Gemeine Holzwespe)
- gegen Vertreter der Unterklasse der Bostrychidae, wie z.B. Bostrychus capucinus (Kapuzinerkäfer),
- gegen Vertreter der Unterklasse der Lyctidae, wie z.B. Lyctus brunneus (Brauner Splintholzkäfer), eingesetzt.

Die Mischungsverhältnisse der einzelnen Komponenten können in den erfindungsgemäßen Kombinationen innerhalb weiter Grenzen schwanken. Aus praktischen Gründen wählt man jedoch Mengenverhältnisse der Kombinationspartner zu den Ammoniumsalzen zwischen 20:1 bis 1:5000, vorzugsweise zwischen 10:1 und 1:1000, insbesonders bevorzugt zwischen 10:1 und 1:25. Für den Kombinationspartner Silafluofen liegt das Verhältnis zu den Ammoniumsalzen vorzugsweise zwischen 1:1 und 1:1000, besonders bevorzugt zwischen 1:2 und 1:500 (Silafluofen : Ammoniumsalz).

Die erfindungsgemäßen Mittel können in den üblichen, dem Fachmann geläufigen Zubereitungen in den Handel gebracht werden. Sie können auf verschiedene Art formuliert werden, je nachdem wie es durch die biologischen und/oder chemisch-physikalischen Parameter vorgegeben ist. Als Formulierungsmöglichkeiten kommen daher infrage:

Spritzpulver (WP), emulgierbare Konzentrate (EC), wäßrige Lösungen (SC), Emulsionen, versprühbare Lösungen, Dispersionen auf Öl- oder Wasserbasis (SC), Ölformulierungen, Suspoemulsionen (SC), Stäubemittel (DP), Beizmittel, Granulate in Form von Mikro-, Sprüh-, Aufzugs- und Adsorptionsgranulaten, wasserdispergierbare Granulate (WG), (EW), ULV-Formulierungen, Mikrokapseln, Wachse oder Köder.

Diese einzelnen Formulierungstypen sind im Prinzip bekannt und werden beispielsweise beschrieben in Winnacker-Küchler, "Chemische Technologie", Band 7, C. Hauser Verlag München, 4. Aufl. 1986; van Falkenburg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zussatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Emulgierbare Konzentrate werden durch Auflösen des Wirkstoffs in einem organischen Lösungsmittel, z.B. Butanol, Cyclohexanon, Diemethylformamid, Xylol oder auch höhersiedenden Aromaten oder Kohlenwasserstoffen, unter Zusatz von einem oder mehreren Emulgatoren hergestellt. Als Emulagtoren können beispielsweise verwendet werden: Alkyllaurylsulfonsaure Calcium-Salze wie Ca-Dodecylbenzolsulfonat oder nichtionische Emulgatoren wie Fettsäurepolyglykolester, Alkyllaurylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxyethylensorbitester.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenolsulfonate und Dispergiermittel, z.B. ligninsulfonsaures Natrium, 2,2'-dinaphthylmethan-6,6'-disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Cadodecylbenzol-sulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophyllit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Als Inertmittel kann insbesondere Glycolsäure-n-butylester, Polyglycolether oder Dipropylenglycolmonoethylether verwendet werden.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen und handelsfertige Ölformulierungen werden vor der Anwendung üblicherweise nicht mehr mit weiteren inerten Stoffen verdünnt.

Die erfindungsgemäßen Mittel werden bevorzugt als wasserverdünnbare Konzentrate oder Fertiglösungen in den Handel gebracht. Die formulierten Mittel enthalten dabei die erfindungsgemäßen Wirkstoffkombinationen beispielsweise zu 0,1 bis 80 Gew.-%.

Bei insektiziden Mitteln können die Konzentrationen der Wirkstoffe in den handelsüblichen Formulierungen verschieden sein. Bei emulgierbaren Konzentraten ist die Wirkstoffkonzentration etwa 1 bis 50 %.

Mit den äußeren Bedingungen wie Temperatur, Feuchtigkeit, dem Anwendungsgebiet, z.B. zur Behandlung von Holz, Boden oder Pflanzen variiert die erforderliche Aufwandmenge an Wirkstoff. Sie kann innerhalb weiter Grenzen schwanken:

1) bei der Behandlung von Holz zwischen 0,00001 g/$m^2$ und 10 g/$m^2$.

2) bei der Behandlung von Boden zwischen 0,0001 g/m$^2$ und 100 g/m$^2$.

3) bei der Behandlung von Pflanzen zwischen 1 g/ha und 1000 g/ha.

Die Anwendungskonzentration kann zwischen 0,1 ppm (≙0,0001 g/l) und 10.000 ppm (≙10 g/l) schwanken, vorzugsweise zwischen 0,5 und 5.000 ppm.

Eine Kombination der Wirkstoffe bedeutet, daß die insektiziden Wirkstoffe gemeinsam ausgebracht oder als sogenannte split-Applikation einige Tage nacheinander ausgebracht werden.

Die erfindungsgemäßen Mittel können bei Bedarf mit weiteren Wirkstoffen, vorzugsweise mit Fungiziden und anderen Insektiziden kombiniert werden. Sofern nichts anderes angegeben wird, bedeuten %-Angaben Gewichtsprozente. Die Erfindung wird durch das nachfolgende Beispiel erläutert, ohne daß diese darauf beschränkt wäre:

Beispiel 1

Wirkung der erfindungsgemäßen Mittel gegen holzzerstörende Termiten.

Als Prüfinsekt wurde Reticulitermes speratus verwendet. Arbeitertiere wurden zusammen mit einer Filterpapierunterlage, die 5 sek. in die das entsprechende Mittel enthaltende Lösung getaucht worden waren, in einem Glasbehälter bei 27 °C plaziert. Pro Wiederholung wurden 5 Tiere eingesetzt. Jeder Ansatz wurde 2-4 mal wiederholt. Die Anzahl der überlebenden Tiere wurde 1 Tag nach der Applikation bestimmt. Deutlich geringere Mengen der erfindungsgemäßen Kombinationen erzielten das gleiche Resultat oder bessere Ergebnisse als die Einzelkomponenten.

Tabelle 1

| Insektizide Wirkung der erfindungsgemäßen Kombinationen gegen Reticulitermes speratus. | | |
|---|---|---|
| Verbindung | Konz. (ppm a.i.) | % Wirkung |
| Alkyl-benzyl-dimethyl ammonium-chloride (A1) | 10<br>1000<br>5000 | 0<br>80<br>100 |
| Silafluofen | 2,5 | 30 |
| Imidacloprid | 25 | 30 |
| Tralomethrin | 0,5 | 20 |
| Permethrin | 2,5 | 60 |
| Silafluofen + A1 | 2,5 + 10<br>2,5 + 1000 | 100<br>100 |
| Imidacloprid + A1 | 25 + 10<br>25 + 1000<br>25 + 5000 | 30<br>100<br>100 |
| Tralomethrin + A1 | 0,5 + 10<br>0,5 + 1000<br>0,5 + 5000 | 50<br>70<br>100 |
| Permethrin + A1 | 2,5 + 10<br>2,5 + 1000<br>2,5 + 5000 | 50<br>100<br>100 |

**Patentansprüche**

**1.** Insektizide Mittel, gekennzeichnet sind durch einen Gehalt an

A) anorganischen oder organischen Ammoniumsalzen der Formel I,

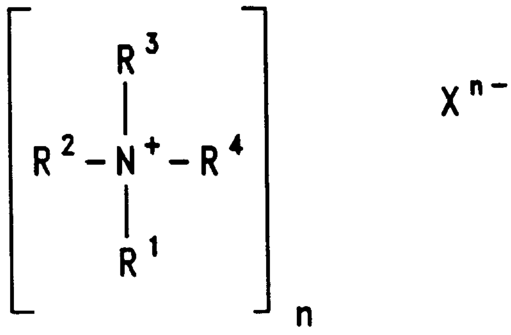

(I)

worin $R^1$ -$R^4$ gleich oder verschieden sind und unabhängig voneinander Wasserstoff oder einen über eine C-N-Bindung gebundenen organischen Substituenten mit bis zu 18 C-Atomen bedeuten, wobei mindestens einer der Reste $R^1$ - $R^4$ von Wasserstoff verschieden ist, $X^{n-}$ das Anion einer anorganischen oder organischen n-basigen Säure und n 1, 2 oder 3 ist,
in Kombination mit mindestens einer Verbindung aus der Gruppe, welche die Verbindungen
B) Silafluofen (4-Ethoxyphenyl-[3-(4-fluor-3-phenoxy-phenyl)-propyl]-dimethyl-silan, Formel II),

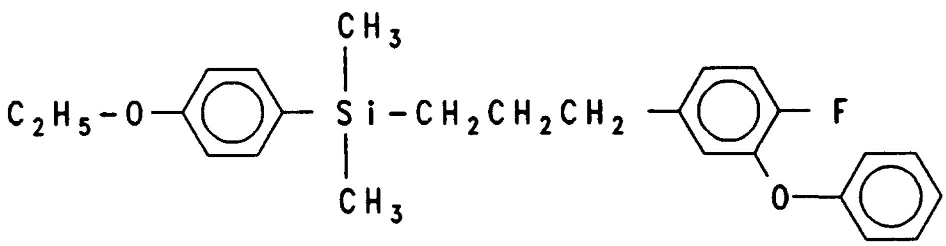

(II)

C) MTI-732 (Formel III),

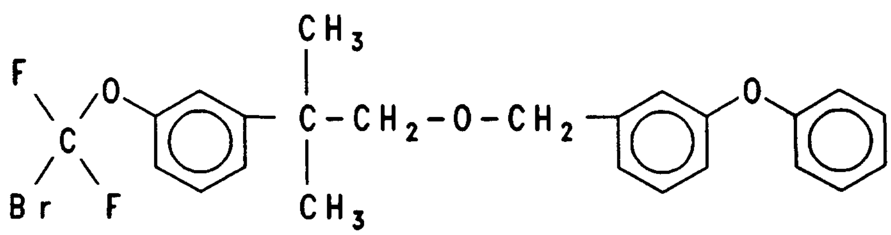

(III)

D) Imidacloprid (Formel IV),

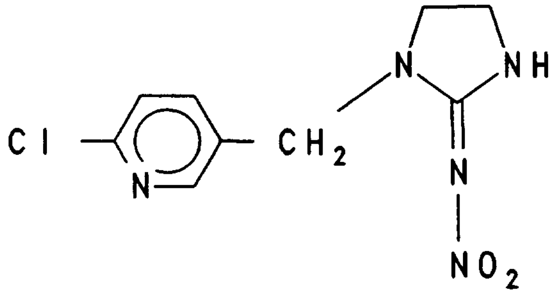

(IV)

E) Ethofenprox (Trebon, MTI-500, (2-(4-Ethoxyphenyl)-2-methylpropyl-3-phenoxybenzylether, Formel V),

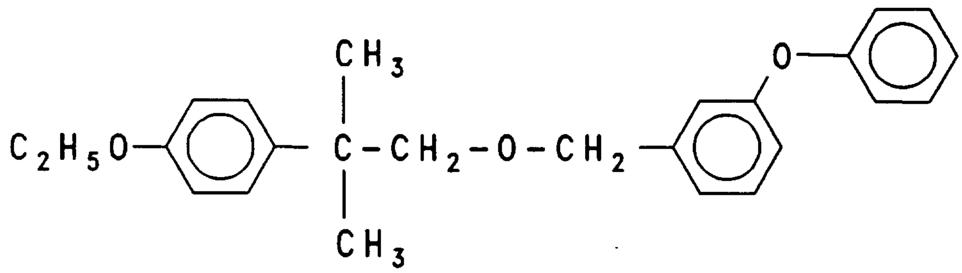

(V)

F) PP 682 (ICI-A5682, Formel VI),

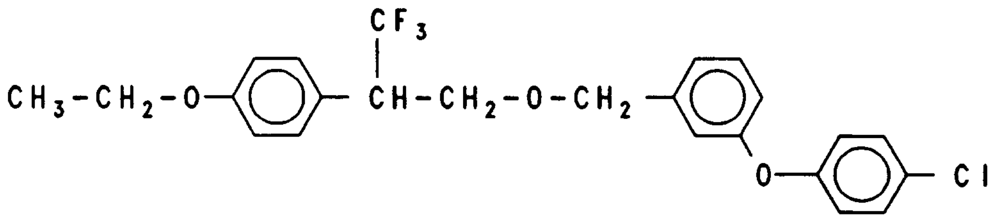

(VI)

G) TI304 (Formel VII),

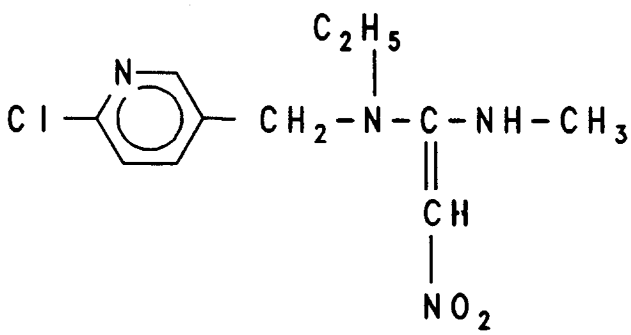

(VII)

H) natürliche oder synthetische Pyrethroide und
I) Phosphorsäureester umfaßt.

**2.** Insektizide Mittel gemäß Anspruch 1, die als Verbindung der Formel I quaternäre Ammoniumsalze enthalten.

**3.** Insektizide Mittel gemäß Anspruch 1, worin $R^1$ bis $R^4$ gleich oder verschieden sind und unabhängig voneinander Wasserstoff, $(C_1\text{-}C_{18})$-Alkyl; $(C_7\text{-}C_{13})$-Aralkyl, wie Benzyl; $(C_1\text{-}C_6)$-Alkoxy-$(C_1\text{-}C_{12})$-alkyl; $[\text{-}CH_2\text{-}CH_2\text{-}O]_x$-Hoder $[\text{-}CH(CH_3)\text{-}CH_2\text{-}O]_x$-H und x = 1, 2 oder 3 ist, bedeuten.

**4.** Insektizide Mittel gemäß Anspruch 1, dadurch gekennzeichnet, daß sie die Verbindung A1 (Alkyl-Benzyldimethylammoniumchlorid) in Kombination mit Silafluofen enthalten.

**5.** Insektizide Mittel gemäß Anspruch 1, dadurch gekennzeichnet, daß sie die Wirkstoffe im Gewichtsverhältnis 20:1 bis 1:10000 enthalten.

**6.** Insektizide Mittel nach Anspruch 1, dadurch gekennzeichnet, daß das Gewichtsverhältnis 20:1 bis 1:5000 beträgt.

**7.** Insektizide Mittel nach einem oder mehreren der Ansprüche 1 bis 5, dadurch gekennzeichnet, daß sie 0,1 bis 50 Gew.-% Wirkstoffgemisch und 99,5 - 50 Gew.-% übliche Formulierungshilfsmittel für Zubereitungen als versprühbaren Lösungen enthalten.

**8.** Verfahren zur Bekämpfung von schädlicher Zerstörung, die durch Insekten verursacht wird, dadurch gekennzeichnet, daß man auf das zu behandelnde Holz, Boden oder Pflanzen eine wirksame Menge eines Mittles gemäß Anspruch 1 aufbringt.

**9.** Verfahren nach Anspruch 8, dadurch gekennzeichnet, daß man die synergistische Mischung in einer Aufwandmenge von 15 bis 600 $l/m^3$ Holz aufbringt.

**10.** Verfahren gemäß Anspruch 5, dadurch gekennzeichnet, daß man Spritzbrühen anwendet, die 0,001 bis 1000 g/l der Wirkstoffkombination enthalten.

**11.** Verwendung eines Mittels gemäß Anspruch 1 zur Bekämpfung von materialzerstörenden Insekten, dadurch gekennzeichnet, daß die Wirkstoffe gemeinsam oder kurz nacheinander ausgebracht werden.